# EUROPEAN PATENT APPLICATION

(11) **EP 1 401 160 A1**
(43) Date of publication of application: **24.03.2004**
(21) Application number: 02722781.8
(22) Date of filing: 25.04.2002
(51) Int. Cl.: H04L 12/56

(54) **PACKET TRACING SYSTEM**

(30) Priority: 27.04.2001 JP 2001133290
(71) Applicant: NTT Data Corporation, Tokyo 135-6033 (JP)
(72) Inventor: OHTANI, Hisamichi, c/o NTT Data Corporation, Koto-ku, Tokyo 135-6033 (JP); HOJO, Takeshi, c/o NTT Data Corporation, Koto-ku, Tokyo 135-6033 (JP); IWATA, Keiichi, c/o NTT Data Corporation, Koto-ku, Tokyo 135-6033 (JP); KEENI MANSFIELD, Glenn, c/o Cyber Solutions, Inc., Sendai-shi, Miyagi 989-3204 (JP)
(74) Representative: Poulin, Gérard
(86) International application number: PCT/JP2002/004139
(87) International publication number: WO 2002/089426

(57) **Abstract**

The purpose of the present invention is supplying a packet tracing system which can trace a route of a packet using existing network components. Packet printing devices 1a, 1b, and 1c generate packet identifying information for each packet which transmits through the communication line and write the packet identifying information to a storage part. An IDS 3 detects suspicious packets in a network under surveillance. A management system which receives a suspicious packet in a network generates a hash value for the suspicious packet and sends a request for examination which contains the hash value to the packet printing devices 1a, 1b and 1c. The packet printing devices 1a, 1b and 1c examine an internal storage part and send a result of examination to the management system 2. The management system 2 obtains a transmission route of the suspicious packet to be traced and by the result of examination and information of network construction.

## Description

### TECHNICAL FIELD

The present invention relates to a packet tracing system which can trace the route of a packet using existing network devices. This application claims priority on Japanese Patent Application No. 2001-133290, the contents which are incorporated herein by reference.

### BACKGROUND ART

An Intrusion Detection System (IDS) is used in conventional communication networks to detecting a suspicious packet. In the case in which a suspicious packet is detected by using an IDS, an address of an originator is used as a key for tracing the suspicious packet. Therefore, if the address of the originator is spoofed, an exact tracing is impossible. For tracing the above spoofed address, a concept of processing a packet and a concept of specifically examination for contents of a packet, for instance adding an information as a key to a packet, are used.

However, privacy of the contents of the packet is lost by examination for the added information in the packet, and in the case where the added information is spoofed data which has been added or altered by a third party in bad faith, it is not possible to exactly trace the packet.

As another method for tracing the packet, a concept of tracing a packet using existing network devices is used. However, it becomes necessary to modify the network devices thereof or part of the construction of the network, and therefore, it is not possible to flexibly change the construction of the network, for instance by adding components and changing location of components.

### DISCLOSURE OF INVENTION

An object of the present invention is to provide a packet tracing system which can trace a route of a packet using existing network components.

An aspect of the present invention relates to a packet tracing system comprising packet printing devices which are arranged at strategic points in communication lines of a communication network under surveillance, a management system which is connected with the packet printing device by another communication line which is physically separated from the communication lines of the communication network, wherein the packet printing devices generate packet identifying information for each of the packets which transmit through the communication line and write the packet identifying information to a storage part, examine the storage part to determine whether data which is the same as the packet identifying information which is sent by the management system exists in the storage part, and to inform the result of the decision to the management system by a request of the management system, and the management system generates packet identifying information from a packet to be traced, sends a request for examination which contains the packet identifying information to a plurality of the packet printing devices, and accepts a data of a transmitting route of the packet to be traced by the result of the examination of the packet printing device and data of the construction of the communication network which is pre-stored in a storage part thereof.

Another aspect of the present invention relates to a packet tracing system comprising packet printing devices which are arranged at strategic points in a communication line of a communication network under surveillance, a management system which is connected with the packet printing device by a communication line which is physically and logically the same as the communication line of the network, wherein the packet printing devices generate packet identifying information for each of the packets which transmit through the communication line and write the packet identifying information in a storage part, retrieve the data from the storage part to determine whether data which is the same as the packet identifying information which is sent by the management system exists in the storage part, and informs the result of the decision to the management system by a request of the management system, and the management system generates packet identifying information from a packet to be traced, sends a request for examination which contains the packet identifying information to a plurality of the packet printing devices, and accepts data of the transmission route of the packet to be traced by the result of the examination of the packet printing system and a information of construction of the communication network which is pre-stored in a storage part thereof.

Another aspect of the present invention relates to a packet tracing system comprising packet printing devices which are arranged at strategic points of a communication line of a communication network under surveillance, a management system which is connected with each of the packet printing devices by a communication line which is physically the same as the communication line of the communication network and is logically different from the communication line of the communication network, wherein the packet printing devices generate packet identifying information for each of the packets which transmit through the communication line and write the packet identifying information to a storage part, examine the storage part to determine whether data which is the same as the packet identifying information which is sent by the management system exists in the storage part, and inform the result of the determination to the management system by a request of the management system, and the management system generates packet identifying information from a packet to be traced, sends a request for examination which contains the packet identifying information to a plurality of the packet printing devices, accepts data of transmission route of the packet to be traced by the result of the examination of the packet printing system and a information of construction of the communication network which is pre-stored in a storage part thereof.

According to the above configuration, it is possible to trace a transmission route of packet using existing components of the network.

Another aspect of the present invention relates to a packet tracing system, wherein the management system sends the request for examination to all of the packet printing devices and receives the result of examination from all of the packet printing devices.

According to the above configuration, it is possible simplify the process for sending the request for examination.

Another aspect of the present invention relates to a packet tracing system wherein the management system sends requests for examination to the packet printing device which is located closest to an intrusion detecting device, and examines the packet identifying information on a point of receiving the request for examination, and requests another packet printing device which is located closest to the one packet printing device to examine the packet identifying information.

According to the above configuration it is possible to increase the efficiency of the detecting process.

Another aspect of the present invention relates to a packet tracing system wherein the management system sends the request for examination sequentially from one data packet printing device which is located closest to the intrusion detecting device, and, in the case in which a result of examination for the request for examination indicates passing of the packet to be traced, sends the request for examination to the packet printing device which is located closest to the packet printing device through which the packet to be traced has transmitted.

According to the above configuration, it is possible to increase the efficiency of the examination process.

Another aspect of the present invention relates to a packet tracing system wherein the packet printing device reads and examines all of the data for packet identification which are stored in the storage part.

According to the above configuration it is possible to simplify the examination process.

Another aspect of the present invention relates to a packet tracing system the management system sends the request of examination which contains a range of time during which the packets are transmitting, and the packet printing device only reads the packet identifying information, within the range of time, from the storage part, and traces the packet.

According to the above configuration it is possible to increase the efficiency of examination processes.

Another aspect of the present invention relates to a packet tracing system wherein the storage part omits the oldest packet identifying information and writes new packet identifying information, in a case where an amount of stored packet identifying information becomes larger than a predetermined amount.

According to the above configuration it is possible to prevent an overflowing of the storage part of which the capacity is limited.

Another aspect of the present invention relates to a packet tracing system wherein the packet printing device further comprises an external storage device and copies the packet identifying information which is written in the storage part to the external storage device according to a request from the management system.

According to the above configuration it is possible to obtain the packet identifying information where necessary.

Another aspect of the present invention relates to a packet tracing system wherein the packet identifying information is a message digest.

According to the above configuration it is possible to minimize the capacity of the storage part which stores the packet identifying information. Also, according to minimize the capacity of the storage part, it is also possible to increase the efficiencies of sorting and examination.

Another aspect of the invention relates to a packet tracing system wherein the message digest is generated for a predetermined portion of the packet.

Because the packet transmits through the network as in the form in which they transmit through the packet printing device, a part of a control data, such as a header, in one packet is different from control data of another packet which is essentially the same as the one packet. According to the above configuration it is possible to generate the packet identifying information having a high accuracy even in a case of using the above controlling data. It is also possible to efficiently use a limited capacity of the storage part in which the packet identifying information is stored by taking a plurality of packets, which are essentially the same in one another, as the same packets, and it is possible to improve examination efficiency by reducing the capacity of the storage part.

Another aspect of the present invention relates to a packet tracing system wherein the message digest is produced by a packet which consists of a combination of divided packets.

According to the above configuration, it is possible to utilize the limited capacity of the storage part, and it is also possible to improve examination efficiency by reducing the capacity of the storage part.

Another aspect of the present invention relates to a packet tracing system wherein the packet identifying information is a packet itself, transmitting through the communication line, without alteration.

According to the above configuration, it is possible to simplify the process of generating the packet identifying information.

Another aspect of the present invention relates to a packet printing devices which are arranged at strategic points of a communication network wherein the packet printing device generates packet identifying information for each of packets transmitting through the communication line, writes the packet identifying information to a storage part, examines whether data which coincide with the packet identifying information is in the storage part, and outputs a result of the examination.

Another aspect of the present invention relates to a packet management system which obtains data of the line through which the packet transmitted according to a result of examination a packet to be traced which is output by packet printing devices which are arranged at strategic points of a communication line which form a communication network under surveillance wherein the packet management system generates a packet identifying information for identifying the packet from the packet to be traced, send a request for examination, which consists of the packet identifying information, to the plurality of packet printing devices, and obtains data for a transmission line of the packet to be traced by the result of examination which is received from each of the packet printing devices and a data for a construction of the communication network which is pre-stored in a storage part.

### BRIEF DESCRIPTION OF THE DRAWINGS

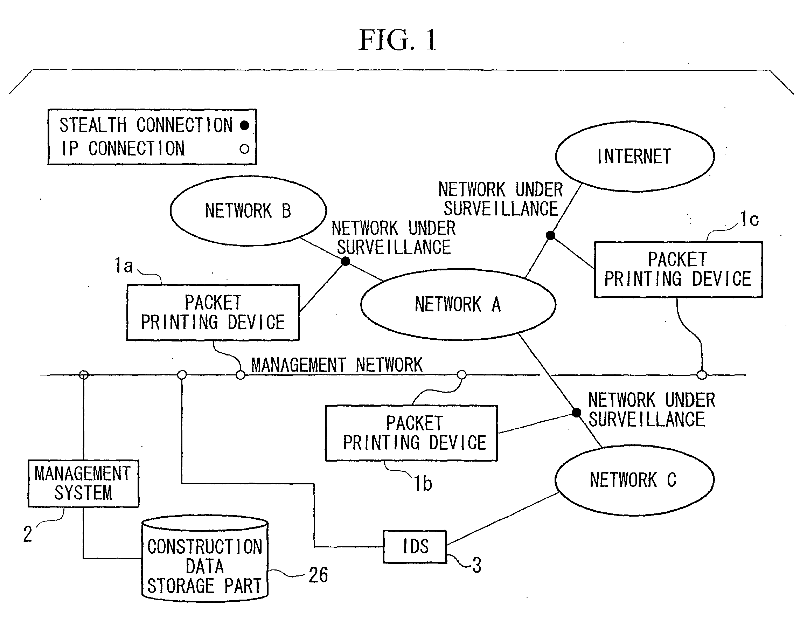

Fig. 1 is a block diagram of the packet tracing system of the present embodiment.
Fig. 2 is a block diagram of the packet printing device of the present embodiment.
Fig. 3 is a sequence flow chart explaining an action of the packet printing device of the present embodiment.
Fig. 4 is a block diagram of the management system of the present embodiment.
Fig. 5 is a block diagram explaining a construction of the packet tracing system of the present embodiment.
Fig. 6 is a diagram explaining operations of a management system and packet tracing system of the present embodiment.
FIG. 7 shows one packet printing device of the present embodiment which is located closest to another packet printing device.

### BEST MODE FOR CARRYING OUT THE INVENTION

First, an outline of an embodiment will be explained. Networks A, B, and C are located in an intranet. The networks B and C are connected to each other by the network A. The network A is connected to the Internet by a provider's server (not shown in the Figures).

A packet printing device 1 is connected to each of connecting links which connect the above networks. In this embodiment, numerals 1a, 1b and 1c are added to the packet printing devices so as to distinguish one packet printing device from the others. The packet printing devices 1a, 1b and 1c are connected to a network for management. Each of the packet printing devices 1a, 1b and 1c monitors each of the networks to which the packet printing devices 1a, 1b and 1c are connected, copies a packet which transmits the networks, generates a message digest and stores the generated message. In this embodiment, the message digest is defined by hash data.

IDS 3 is connected to the network C and watches for a suspicious packet which intrudes to the network C.

A management system 2 stores the data of the construction of the network and is located in the vicinity of IDS 3 and is also connected to IDS 3. The management system 2 can communicate with the packet printing devices 1a, 1b and 1c by the network for management.

The IDS 3 finds a suspicious packet in the network C, then the IDS 3 sends an alarm and the suspicious packet to be traced to the management system 2.

The management system 2 receives the alarm and the suspicious packet to be traced, then the management system 2 generates a hashed value from the received suspicious packet. A portion of the suspicious packet which contains data for identifying the suspicious packet or a copy of the suspicious packet is available for identifying the suspicious packet in place of using the above hashed value. That is, other data which is suitable for identifying a received packet is also available.

Next, the management system 2 recognizes the location of the packet printing device 1 and send a request for examination which contains hash value which is generated in a manner so as not to overload the network. In this embodiment, the request for examination which contains the hashed value thus generated is sent to all of the packet printing devices 1a, 1b and 1c.

Each of the packet printing devices 1a, 1b and 1c determines whether the received hashed value coincides with the hashed value which is stored therein. The packet printing devices 1a, 1b and 1c send a result of the above examination to the management system 2.

The management system 2 constructs a transmission route of the packet by the results which are sent by the packet printing devices 1a, 1b and 1c, and the data of the construction of the network. For instance, the management system 2 recognizes that the suspicious packet has come through the network A in the case where a result which indicates that the packet printing devices 1b and 1c store the hashed values which coincide with the hashed value of the packet. The management system 2 informs the result to a network manager, etc. The network manager, etc., informs the transmission of a suspicious packet to a provider through which the suspicious packet transmitted by the above result. By the above processes, security of the network is maintained.

The above network can be constructed by a wired communication line or a wireless communication line.

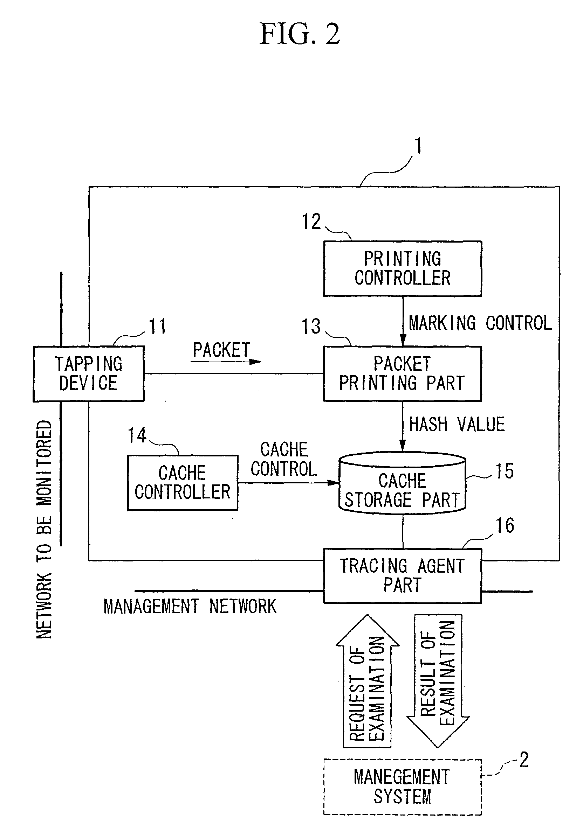

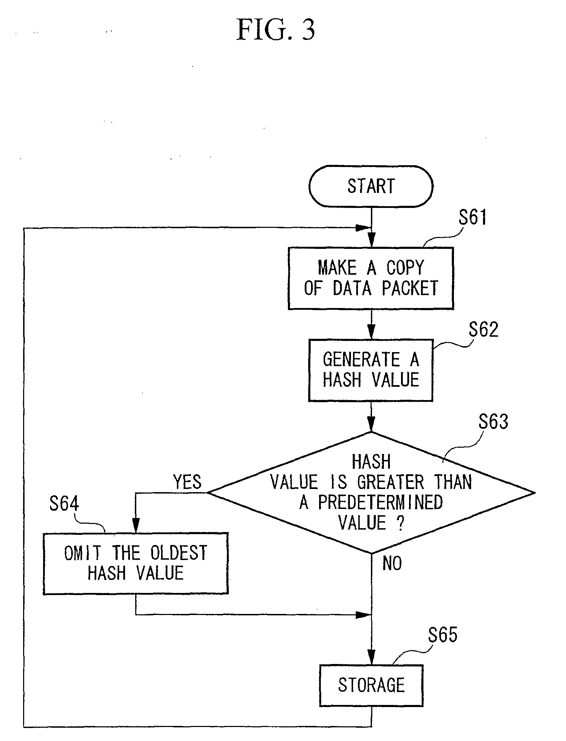

This embodiment will be specifically explained in reference to the figures. Fig. 2 is a block diagram of the packet printing device 1 (1a, 1b, 1c), which explains a deployed construction of the packet printing device 1. Fig. 3 explains an action of the packet printing device 1. The construction and the action of the packet printing device 1 will be explained with reference to Figs. 2 and 3.

Numeral 11 indicates a tapping device. The tapping device 11 makes a copy of a packet which transmits a network under surveillance and also to be connected (S61 in Fig. 3). In this embodiment, a stealth connection is used for the connection to the network under surveillance.

Numeral 12 indicates a printing controller. The printing controller 12 informs a method in advance to generate a hash value (hash function) to a packet printing part 13.

Numeral 13 indicates the packet printing part. The packet printing part 13 generates a hash value of the packet which is copied by the tapping device 11 by using the hash function which is directed by the printing controller 12 (S62 in Fig. 3).

Numeral 14 indicates a cache controller. The cache controller 14 recognizes a quantity of the hash value (a number of the hash value) which is stored in a cache storage part 15 (S63 in Fig. 3). In the case in which the quantity of the hash value which is stored in the cache storage part 15 is greater than a predetermined quantity, the cache controller 14 deletes the oldest hash value which is stored in the cache storage part 15 (S64 in Fig. 3). In the case in which the quantity of the hash value which is stored in the cache storage part 15 is less than a predetermined quantity, the cache controller 14 additionally writes a new hash value to the end of data which is stored in the cache storage part 15.

Thus, the cache controller 14 controls the cache storage part 15 so as to ensure the quantity of the hash value which is stored in the cache storage part 15 to be less than or equal to the predetermined quantity. The TTL (Time to Live) which indicates the life of a packet is attached to each header part of the packet. The cache controller 14 writes the hash value to a vacant field of the cache storage part 15 in connection with a time stamp which indicates the time when the packet transmitted and also in connection with TTL (S65 in Fig. 3).

The packet printing device 1 performs the above processing for each of the packets which transmits through the network under surveillance. Numeral 16 indicates a tracing agent part. The tracing agent part 16 is connected to a network for management by an IP connection and communicates with the management system 2. The performances of the tracing agent part 16 will be explained later in the explanation of the action of the management system 2.

In this embodiment, the network to be processed exists independent of the network for management, and therefore an intruder from the network cannot detect the existence of the packet printing device 1.

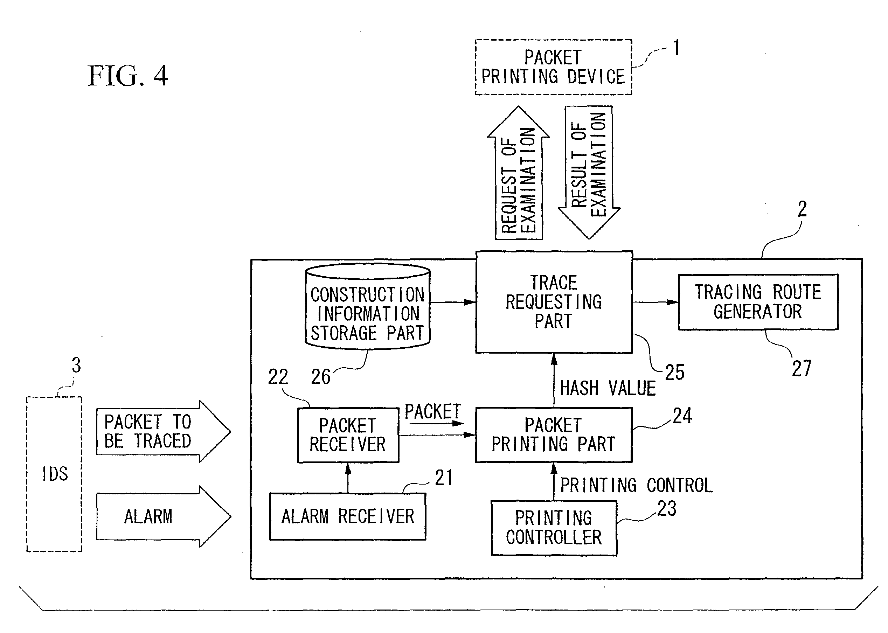

Next, the management system 2 will be explained with reference to the figures. Fig. 4 is a block diagram which indicates the construction of the management system 2. In Fig. 4, numeral 21 indicates an alarm receiver which receives an alarm which is output by the IDS 3, to which the alarm receiver 21 is connected, for a suspicious packet. Numeral 22 indicates a packet receiver which receives a suspicious packet from the IDS 3 to which the packet receiver 22 is connected.

Numeral 23 indicates a printing controller which preliminarily outputs a method for generating a hash value (hash function) to a packet printing part 24.

A method which is addressed by the printing controller 12 of the packet printing device 1 is always same as a method which is addressed by the printing controller 23 of the management system 2.

Numeral 24 indicates a packet printing part which generates a hash value by a method (hash function) which is addressed by the packet printing controller 23. Numeral 25 indicates a trace requesting part which send a request for examination which contains the hash value which is generated by the packet printing part 24 to each of the packet printing devices 1a, 1b, 1c and receives a result of examination.

Numeral 26 indicates a construction of the information storage part which acts as an database for storing a configuration information of the network under surveillance and the network for management. Numeral 27 indicates a tracing route generator which generates a transmission route of a packet using results obtained from the packet printing devices 1a, 1b, 1c and information which is contained in the construction information storage part 26.

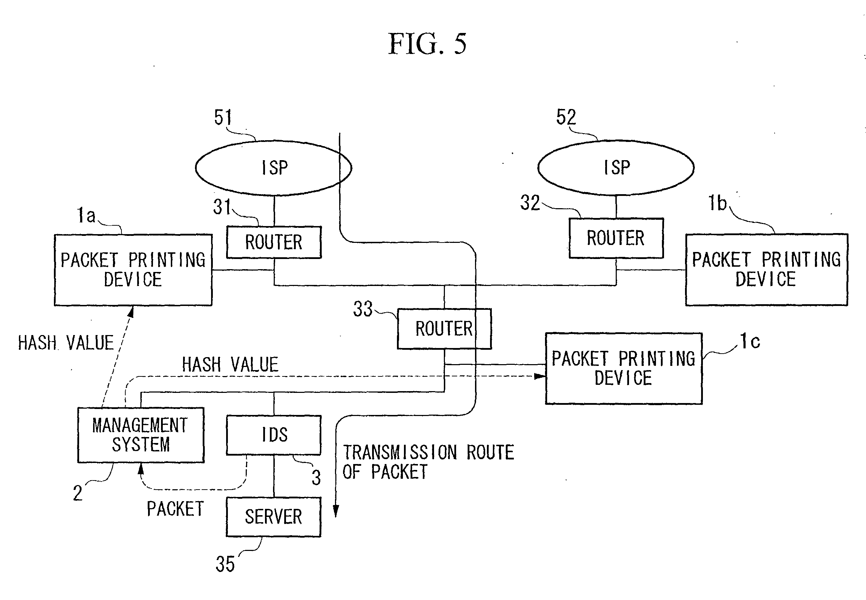

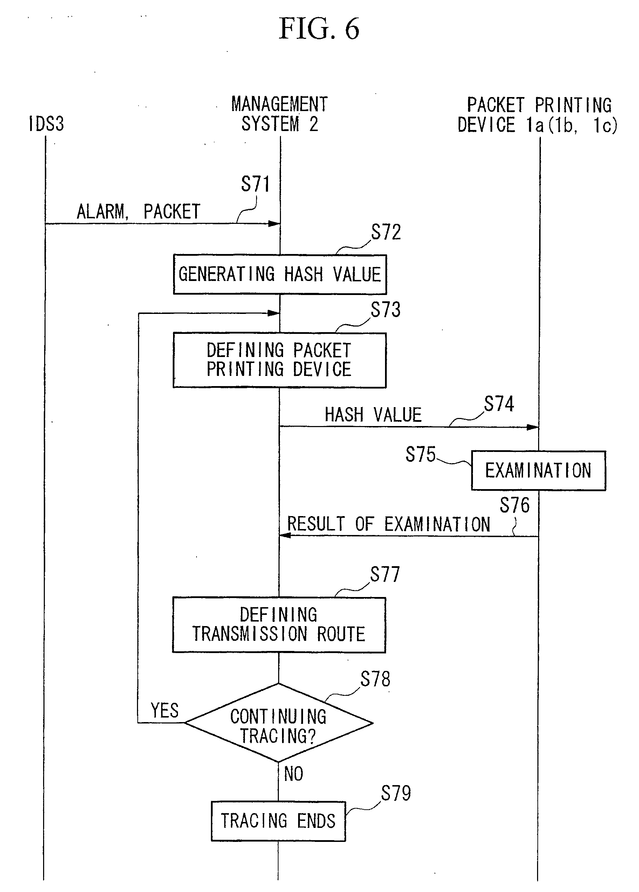

The packet tracing operation of the management system 2 in the configuration shown in Fig. 5 will be explained with reference to Fig. 6.

In Fig. 5, numerals 51 and 52 indicate an ISP (Internet Service Provider), and numeral 35 indicates a server which hosts a web page, etc.

ISPs 51, 52 and the server 35 are mutually connected by routers 31, 32 and 33.

The packet printing devices 1a, 1b and 1c are connected to a network to which the routers 31, 32 and 33 are connected. The packet printing devices 1a, 1b and 1c treat the network which is connected with the routers 31, 32, 33 as a network under surveillance, generate hash values for all of the packets which transmit the routers 31, 32 and 33, and store the hash values. In this embodiment, the packet printing devices are synchronized by synchronizing their internal clocks by using NTP (Network Time Protocol) synchronization.

IDS 3 is connected to a server 35. IDS 35 detects a suspicious packets in the server 35. The management system 2 is connected near the IDS 3.

The packet printing devices 1a, 1b, 1c, the management device 2, and the IDS 3 are connected to the network for management (not shown in figures) by using the IP connection.

When the IDS 3 detects a suspicious packet in the server 35, the IDS 3 sends an alarm for the suspicious packet to the management system 2. The management system 2 receives the alarm by the alarm receiver 21, then the management system 2 requests the IDS 3 to send the packet by which the alarm was generated. The IDS 3, in response, sends the suspicious packet itself to the management system 2. The packet receiver 22 of the management system 2 receives the packet to be traced (S71 in Fig. 6).

The printing controller 23 preliminarily sends a method to generate a hash value (hash function) to the packet printing part 24. The packet printing part 24 generates a hash value from the packet which is received by the packet receiver 22 by using the hash function which is addressed by the printing controller 23 (S 72 in Fig. 6).

The trace requesting part 25 ascertains the location and the number of the packet printing device 1 by referring the construction information storage part 26, and specifies the packet printing device 1 to send a request of examination. In the case in which a number of the packet printing devices 1 which are located in the vicinity of the packet management system 2 is low, the trace requesting part 25 sends a request for examination which contains the generated hash value to each of the packet printing devices 1 which are located in a vicinity of the packet management system 2. In the case in which a number of the packet printing devices 1, which are located in the vicinity of the packet management system 2, is high, the trace requesting part 25 sends a request for examination which contains the generated hash value, in sequence, starting from the nearest packet printing device 1. In this embodiment, the trace requesting part 25 sends the request for examination to the packet printing device 1c.

The tracing agent part 16 of the packet printing device 1c receives the request for examination (S74 in Fig. 6). Next, the tracing agent part 16 examines whether the cache storage part 15 contains a hash value identical to the received hash value (S75 in Fig. 6). In the case in which the received hash value coincides with the stored hash value, the tracing agent part 16 sends the signal "true" to the trace requesting part 25 in the management system 2, and in the case in which the received hash value does not coincide with the stored hash value, the tracing agent part 16 sends the signal "false" to the trace requesting part 25 in the management system 2 (S76 in Fig. 6).

In the case where the cache storage part 15 stores the corresponding hash value, the tracing agent part 16 in the packet printing device 1c sends a result of examination which contains the time stamp which is stored in connection with the hash value and the TTL.

In the present embodiment, the packet printing device 1c sends the signal "true" as the result of examination to the management system 2.

The trace requesting part 25 of the management system 2 receives the result of examination. The tracing route generator 27 generates data of a transmission route for the packet to be traced by comparing the result of examination with the data of the construction of the network.

In this embodiment, because the management system 2 receives the result of "true" from the packet printing device 1c, a route between the IDS 3 and the packet printing is defined as a transmission route (S 77 in Fig. 6).

In the case where the management system 2 receives the result of "false", because the suspicious packet comes from the server 35 or a terminal (not shown in figures) which is connected with the server 35, the tracing of the transmission route of the packet ends.

Next, the trace requesting part 25 detects whether a packet printing device 1, which is located in the vicinity of the packet printing device 1c and to which a request for examination has not been sent, exists with reference to the construction information storage part 26 (S78 in Fig. 6). According to the result of the examination, other packet printing devices 1a and 1b to which a request for examination has not be sent will be detected. Then, the trace requesting part 25 sends a request for examination to the packet printing device 1c which is located in the vicinity of the packet printing device 1b.

The packet printing device 1b examines the cache storage part 15 and sends a result of this examination. In the present embodiment, a result "false" is sent.

The trace requesting part 25, which has received the result "false" from the packet printing device 1b, of the management system 2 detects the above packet printing device 1, and sends a request for examination to the packet printing device la.

The packet printing device 1a examines the cache storage part 15 and sends a result of examination. In the present embodiment the result "true" is sent.

The tracing route generator 27, which has received the result "true" from the packet printing device 1a, of the management system 2 takes a route from the packet printing device 1c to the packet printing device 1a as a transmission route of the suspicious packet.

Next, the trace requesting part 25 performs a detecting for the packet printing device 1. In the present embodiment, a packet printing device 1 which has not sent the request for examination does not exist, therefore the tracing ends.

The tracing route generator 27 informs the data of the transmission route of the packet thus generated by a report to a manager of network, etc. Because the transmission route of the suspicious packet is between the packet printing device 1c and the packet printing device 1a, it is possible to infer that the suspicious packet comes from the ISP 51. The network manager can consider a counter plan for the suspicious packet, for instance, reporting to a manager of the ISP 51.

Even in a case in which a data stored in the construction information storage part 26 is not sufficient or the number of the packet printing device 1 is not sufficient, it is possible to infer a route by a time stamp and a TTL which are related to the hash value.

In the present embodiment, MD 5 or another method (hash function) for generating a hash value are available for the packet printing device 1 and the management system 2.

Some variations which are available for the present embodiment for generating a hash value will be explained.

### 1. For identical packets

A method which is suitable against a DoS attack (Denial of Service), etc., by sending a great number of identical packets will be explained.

A simplified form of a packet consists of a header portion and a content portion. One packet having the same content portion as another packet may have a header portion which is different from a header portion of another packet according to a transmission route of the packets. Packets having the same content portion are expected to have hash values which are different from each other while a hash value is made from entire packets. Therefore it is possible to generate a hash value for one packet which is the same as another packet which has the same content portion as the one packet by generating a hash value from portions of packets except ID number, TTL, and Header Check Sum which are different for each of the packets.

The packet printing device 1 generates the hash value by using the above method. After the packet printing device 1 finds same hash values which are continuously generated, the packet printing device 1 discards the generated same hash values without storing.

### 2. Combination of the packets

Usually data for one operation is divided into a plurality of packets and sent. It is possible to combine the divided packets for one portion and generate a hash value from the combined new packet. Some methods for combining the divided packets will be explained.
i) Combining a plurality of packets for each unit of sessions (for each unit of operations).
ii) Combining the header portions except ID number, TTL and Header Check Sum which are different for each of the packets.
iii) Combining a leading portion of the packet with the content of all of the following packets.

By generating a hash value from the packet thus combined, it is possible to store the packet for each unit of the sessions.

By using variations of the hash value which are explained in the above items i) and ii), it is possible to minimize the capacity of the cache storage part 15 of the packet printing device 1. Because the capacity of the cache storage part 15 can be minimized, it is also possible to improve the efficiency of sorting and detecting. The variation in the item i) also has a merit of generating a packet identifying information having an improved accuracy.

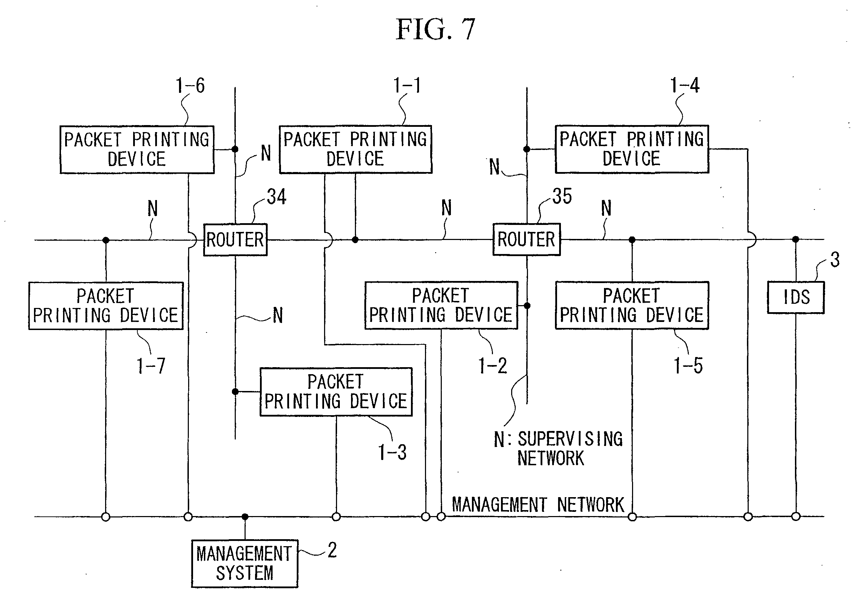

Next, a process for deciding a destination to which a result of detection, which is returned by the packet printing device 1 as a response for a request for examination from the management system 2, is sent will be explained with reference to Fig. 7. In Fig. 7 an item N indicates a supervising network to which the routers 34 and 35 are connected. Numerals 1-1 to 1-7 indicate packet printing devices each of which is connected to the supervising network N.

### (a) In a case of sending a request for examination for each of the packet printing devices

The management system 2 sends a request for examination containing packet identifying information which is informed by the IDS 3 to all of the packet printing devices 1-1 to 1-7. Then, any of the packet printing devices which receives the request for examination detects their own records and send results to the management system 2.

### (b) In a case of sending a request for examination only to a packet printing device which is located closest to the IDS

The management system 2 sends a request for examination, containing packet identifying information which is informed by the IDS 3, only to one of the packet printing device 1-5 which is located closest to the IDS 3 through the network for management. The packet printing device 1-5 which receives this request sends requests for examination to the packet printing devices 1-1, 1-2 and 1-4 which are located close to the packet printing device 1-5. Each one of the packet printing devices 1-1 to 1-7 stores its own packet printing devices, to send the request for examination, which are located close to the one packet printing device. The packet printing devices 1-1, 1-2 and 1-4 which receive the request for examination inform the result of examination the packet identifying information, to the packet printing device 1-5 which sent the request for examination. Each of the packet printing devices 1-1, 1-2 and 1-4 sends the request to the packet printing devices 1-3, 1-6 and 1-7 which are located near the packet printing devices 1-1, 1-2 and 1-4, only in a case of storing the packet identifying information of the packet to be traced therein. The packet printing devices examine the packet to be traced by repeating the above action, and the packet printing device 1-5 summarizes and sends the results of examination to the management system 2. By the above processing the management system 2 can trace packets by sending a request for examination only to the one packet printing device 1-5. The request for examination is sent to the other packet printing devices which are located nearby only in the case where the packet tracing devices store the packet identifying information of the packet to be traced, and therefore, examination and tracing efficiency increases.

### (b) In a case of further sending a request for examination only in a case of finding a transmission of a packet

The management system 2 sends a request for examination, which contains a packet identifying information which is informed by the IDS 3, only to the packet printing device 1-5 which is located closest to the IDS 3. Then the management system 2 sends a request for examination to a packet printing device which is located closest to the packet printing device 1-5, in the case where the packet printing device, to which the request for examination was sent, stores the packet identifying information of a packet to be traced, and receives a result of examination. The management system 2 stores a definition of a nearest packet printing device for each of the packet printing devices 1 in advance. The management system detects a transmission route through which a packet to be traced transmitted by repeating the above processes. Because the request for examination is generated only in a case where any of the packet printing devices 1 stores a packet identifying information of the packet to be traced, it is possible to increase an efficiency of examination.

It is possible to obtain a packet identifying information by a method which is different from the above examination. In other words, packet identifying information which is possible to be obtained without modifying a packet thereof or specifically detecting contents of the packet is available for the above detecting.

In the present embodiment, the network under surveillance and the network for management are mutually independent. However, the network under surveillance and the network for management are not limited in the present embodiment. It is also possible to connect the tracing agent part 16 of the packet printing device 1 to the network under surveillance, and send the request for examination through the network under surveillance. In summary, the packet printing device 1 must be connected with the management system 2 by a communication network. In other words, the communication network for management which is physically the same as the communication network for supervising and is logically different from the communication network for supervising is available, a communication network for management which is physically the same as the communication network for supervising and is logically the same as the communication network for supervising is also available.

In the present embodiment, the management system 2 receives an alarm for the suspicious packets from IDS 3, and then receives the suspicious packet itself. However, it is possible to receive the alarm and the suspicious packet itself at the same time.

In the present embodiment, internal clocks of the packet printing devices 1a, 1b and 1c are synchronized by using NTP (Network Time Protocol); however a method for synchronizing is not limited to using NTP. A GPS clock, etc., may be used for the synchronizing of the packet printing devices.

It is possible for the packet printing devices to store the packet identifying information for each of the packet printing devices 1a, 1b and 1c and repeatedly send the packet identifying information thus stored in each of the packet printing devices 1a, 1b and 1c to the management system 2 at a predetermined interval. In this sending, it is preferable to arrange an external storage part device which has a capacity to store an estimated amount of packets which are expected to transmit through each of the packet printing devices. It is possible to limit the time for detecting a request for examination, in which a transmission time of a packet to be traced is specified, by pre-storing a transmission time of a packet together with the packet identifying information in each of the packet printing devices 1a, 1b and 1c. According to this method, it is possible to examine a suspicious packet by the transmission time; therefore, it is possible to decrease an examination time the suspicious packet and it is also possible to quickly trace a suspicious packet.

It is also possible to store the packet identifying information which are stored in the packet printing devices 1a, 1b and 1c to an additional storage media having more capacity of storage by a trigger signal which is supplied by an external means. It is also possible to store the data from the additional storage part to a portable storage part media in place of the communication using the network for management.

It is also possible to add a function of the IDS 3 to the packet printing devices 1a, 1b and 1c. According to this additional function, the packet printing devices 1a, 1b and 1c themselves can examine a suspicious packet and inform the suspicious packet to the management system 2 on an examination point of the suspicious packet without a request for examination from the management system 2.

The present invention can be realized by a computer program, which is recorded in a medium which can be read by a computer system, which performs function of all or part of the components in Figs. 2 and 4. In this embodiment the "computer system" means a system containing a computer, operating system and, hardware such as peripheral equipment.

The "computer system" means an environment for accessing or displaying web pages in the case of using the WWW (World Wide Web) system.

The "readable media for computer" means a recording medium, for instance a flexible disk, optical magnetic optical disk, ROM, CD-ROM, a hard disk mounted in a computer, etc. The "readable media for computer" means a recording medium which can actively hold a program for a predetermined short period of time, for instance, a communication line such as network of the internet, a telephone line, etc., and a volatile storage part mounted in a computer which acts as a server or a client. A program which performs a part of the above performances or a program which performs the above performances in combination with another program which has been stored in a computer system to which the program is loaded.

A concrete construction of the present invention is not limited to the above explained embodiment, and changes in design, etc., are possible.

## Claims

1. A packet tracing system comprising:
packet printing devices which are located at strategic points of a communication line of a communication network under surveillance, a management system, of the packet tracing system, which is connected with said packet printing devices by another communication line which physically differs from said communication network,
wherein each of said packet printing devices generate packet identifying information for each of packets which is transmitted through said communication line and stores said packet identifying information to a storage part, examines said storage part for ascertain whether data which is the same as the packet identifying information which is sent by said management system exists in said storage part, and informs the result of said examination to said management system by a request of said management system, and
wherein said management system generates packet identifying information from a packet to be traced, sends a request for examination which contains said packet identifying information to said packet printing devices, and obtains a data of transmission route of said packet to be traced by the result of said examination of said packet printing system and a information of construction of said communication network which is pre-stored in a storage part thereof.

2. A packet tracing system comprising:
packet printing devices which are arranged at strategic points of a communication line of a communication network under surveillance, and
a management system which is connected with said packet printing devices by a communication line which is physically and logically the same as said communication line,
wherein each of said packet printing devices generates packet identifying information for each of packets which are transmitted through said communication line and stores said packet identifying information to a storage part, examines said storage part for ascertain whether a data which is the same as the packet identifying information which is sent by said management system exists in said storage part, and informs the result of said determination to said management system by a request of said management system, and
wherein said management system generates a packet identifying information from a packet to be traced, sends a request for examination which contains said packet identifying information to a plurality of said packet printing devices, and obtains data of transmission route of said packet to be traced by the result of said examination of said packet printing system and a information of configuration of said communication network which is pre-stored in a storage part thereof.

3. A packet tracing system comprising:
packet printing devices arranged at strategic points of a communication line of a communication network under surveillance, and
a management system which is connected with each of said packet printing devices by a communication network which is physically the same as said communication network and is logically different from said communication network,
wherein said packet printing devices generate packet identifying information for each of packets which are transmitted through said communication line and store said packet identifying information to a storage part, examine said storage part for examining whether data which is the same as the packet identifying information which is sent by said management system exists in said storage part, and informs a result of said examination to said management system by a request of said management system, and
wherein said management system generates packet identifying information from a packet to be traced, sends a request for examination which contains said packet identifying information to a plurality of said packet printing device, and obtains data of the transmission route of said packet to be traced by the result of said detecting of said packet printing system and information of construction of said communication network which is pre-stored in a storage part thereof.

4. A packet tracing system according to any one of claims 1 to 3,
wherein, said management system sends said request for
examination to all of said packet printing devices and receives the result of examination from all of said packet printing devices.

5. A packet tracing system according to any one of claims 1 to 3,
wherein said management system requests examination to one packet printing device which is located closest to an intrusion detecting device, and
wherein said one packet printing device examine the packet identifying information on a point of receiving said request for examination, and requests another packet printing device which is located closest to said one packet printing device to examine the packet identifying information.

6. A packet tracing system according to any one of claims 1 to 3,
wherein, said management system sends the request for examination sequentially starting from one packet printing device which is located closest to an intrusion detecting device to other printing devices, and, in the case where a result of examination for said request for examination indicates passage of the packet to be traced, sends the request for examination to the other packet printing device which is located closest to the one packet printing device through which the packet to be traced has passed.

7. A packet tracing system according to any one of claims 1 to 3,
wherein said packet printing device reads and examines all data for identifying the packets which are stored in said storage part.

8. A packet tracing system according to any one of claims 1 to 3,
wherein said management system sends the request for examination which contains a range of time within which the packets passed, and said packet printing device reads only the packet identifying information within said range of time from the storage part and examines the packet identifying.

9. A packet tracing system according to any one of claims 1 to 3,
wherein said storage part omits the oldest packet identifying information and stores new packet identifying information, in a case in which an amount of stored packet identifying information becomes larger than a predetermined amount.

10. A packet tracing system according to any one of claims 1 to 3,
wherein said packet printing device further consists of an external storage part and copies the packet identifying information which is stored
in said storage part to the external storage part according to a request of said management system.

11. A packet tracing system according to any one of claims 1 to 3,
wherein said packet identifying information is a message digest.

12. A packet tracing system according to any one of claims 1 to 3,
wherein said message digest is generated from a predetermined parts of the packet.

13. A packet tracing system according to any one of claims 1 to 3,
wherein said message digest is produced by a packet which is combined with packets.

14. A packet tracing system according to any one of claims 1 to 3,
wherein said packet identifying information is a packet itself passing through the communication line, without alteration.

15. A packet printing devices arranged at strategic points of a communication line to be monitored,
wherein said packet printing device generates a packet identifying information for each of packets passing through said communication line, storages the packet identifying information to a storage part, examines whether data coincides with the packet identifying information in said storage part, and outputs a result of said examination.

16. A packet management system which obtains a data of a transmission route according to a result of examination of a packet to be traced which is output by a packet printing device which is arranged at strategic points of communication lines which consist a communication network under surveillance;
wherein said packet management system generates packet identifying information for identifying the packet from the packet to be traced, sends a request for examination which consists of said packet identifying information to said plurality of packet printing device, and obtains data for a transmission route of the packet to be traced by the result of examination which is received from each of the packet printing devices and data for a construction of the communication network which is pre-stored in a storage part.
